# EUROPEAN PATENT APPLICATION

(11) **EP 3 026 526 A1**
(43) Date of publication of application: **01.06.2016**
(21) Application number: 15196171.1
(22) Date of filing: 25.11.2015
(51) Int. Cl.: G06F 1/18, G06F 1/20

(54) **A HIGH-POWER COMPUTER SWITCHING POWER SUPPLY**

(30) Priority: 27.11.2014 CN 201420726593 U
(71) Applicant: Guangzhou Aojie Science & Technology Co., Ltd., Baiyun District Guangdong 510000 (CN)
(72) Inventor: WU, Shaoxiong, 510000 Renhe Town, Baiyun District Guangzhou, Guangdong VR (CN)
(74) Representative: Hellmich, Wolfgang

(57) **Abstract**

The present invention relates to a high-power computer switching power supply, comprising a shell and a plurality of wires; the shell comprises an upper cover and a bottom shell; a PCB (Printed Circuit Board) is disposed above the bottom shell; a support plate is disposed on the edge of the PCB; a plurality of adapter interfaces are disposed on the support plate and are electrically connected with respective output ends of the PCB respectively; a rear side plate is provided with a plurality of power wire outlet holes which are matched with the adapter interfaces respectively, and the adapter interfaces extend out from the wire outlet holes respectively; connectors are disposed on both ends of each wire respectively; and one end of each of the plurality of wires is connected with the adapter interface through the connector in a one-to-one correspondence manner.

## Description

### FIELD OF THE INVENTION

The present invention relates to a computer power supply, in particular to a high-power computer switching power supply.

### BACKGROUND OF THE INVENTION

A computer power supply is a device which is mounted inside a computer and configured to convert common 220V alternating-current commercial power into low-voltage direct current so as to supply power to components, such as a mainboard, a graphics card, a hard disk and a CD driver, inside the computer and respectively supply different voltages of 12V, 5V, 3.3V and the like to the components inside the computer, and accordingly there is a need to dispose multiple strands of wires output towards the outside of a shell inside a power supply shell; in addition, due to a complicated circuit structure and numerous electronic elements, heat dissipation inside the power supply is not easy to realize. Although an existing computer power supply employs combing multiple strands of wires into one strand at an outlet of a power supply shell and respectively disposing different connectors, and the connectors are selected from multiple strands of wires to access into slots of the mainboard, the graphics card, the hard disk, the CD driver and other internal components for supplying power while the computer is assembled, with the continuous increase of user demands, power output wires need to be expanded at any moment and the output power also needs to be promoted, and at this moment, the power supply demands of all the internal components of the computer cannot be met until the whole power supply is replaced; or there is no need for a computer hobbyist who assemblies the computer by DIY to install additional components such as the CD driver and an independent CD graphics card, in addition to essential mainboard, hard disk and the like, and at this moment, there must have been abundant power output wires and connectors left in a computer case to bring potential safety hazards.

### SUMMARY OF THE INVENTION

In order to overcome the defects of the prior art, the present invention mainly aims at provide a high-power computer switching power supply which is convenient for heat dissipation and capable of being made by DIY, and the specific solution adopted by the present invention to realize the purpose is as follows:
A high-power computer switching power supply comprises a shell and a plurality of wires, wherein the shell comprises an upper cover and a bottom shell; a through hole through which a heat dissipation fan is disposed is formed in the middle of the upper cover, and both ends of the upper cover are bent towards the same side to form a left side plate and a right side plate; a PCB is disposed above the bottom shell, essential elements are disposed on the PCB, and both ends of the bottom shell are bent towards the same side to form a front side plate and a rear side plate; the front side plate is provided with heat dissipation holes and power wire inlet holes; the upper cover and the bottom shell are staggered by 90 degrees and are connected by bolts; and
a support plate is disposed on the edge of the PCB, a plurality of adapter interfaces are disposed on the support plate and are electrically connected with respective output ends of the PCB respectively, the rear side plate is provided with a plurality of power wire outlet holes matched with the adapter interfaces respectively, and the adapter interfaces extend out from the wire outlet holes; and connectors are disposed on both ends of each wire respectively, and one end of each of the plurality of wires is connected with the adapter interface through the connector in a one-to-one correspondence manner.

Preferably, the adapter interface comprises an insulation shell and a plurality of terminal Pins, wherein the insulation shell is fixedly connected to the PCB and provided with a cavity, the cavity is provided with an opening, and one end of each of the plurality of terminal Pins is fixedly connected to the bottom of the cavity of the insulation shell and is electrically connected with the respective output end of the PCB;
fixture blocks matched with the connectors in a buckling manner are disposed on the top of the insulation shell; and
the inner wall of the cavity of the insulation shell is of an anti-misplug chamfering design.

Preferably, the support plate is equipped with a printed circuit, and the plurality of terminal Pins are electrically connected with respective output ends of the PCB through the printed circuit.

Preferably, the edge of each power wire outlet hole of the rear side plate is equipped with an extension portion facing to the inner side of the shell.

According to the high-power computer switching power supply provided by the present invention, a pluggable type design is realized between the wires and the PCB inside the power supply through the connectors and the adapter interfaces, and the PCB can preset multiple output ends and the adapter interfaces to facilitate expansion or DIY assembly, while temporarily undesired output ends may not connect with the wires, so that no redundant wires and connectors are present, and therefore, a computer case is tidy inside and free of potential safety hazards; and moreover, the PCB changes an original output design of multiple strands of wires, so that the internal space of the power supply is more convenient for heat dissipation, the service life of the power supply can be effectively prolonged and the output power can be improved.

### BRIEF DESCRIPTION OF THE DRAWINGS

The attached drawings described herein are used to provide further understanding of the present invention, constitute a part of the present application, but do not constitute inappropriate defining to the present invention, in attached drawings:
FIG. 1 is a structural schematic diagram of the embodiment of the present invention;
FIG. 2 is a structural schematic diagram of the adapter interface of the embodiment of the present invention; and
FIG. 3 is a front view of the PCB and the adapter interface of the embodiment of the present invention.

### DETAILED DESCRIPTIONS OF THE PREFERRED EMBODIMENTS

The present invention will be described in detail by reference to the attached drawings and in conjunction with the specific embodiments, and the example embodiments and the description of the present invention are just for the purpose of illustrating the prevent invention, but not limiting the present invention.

### EMBODIMENT

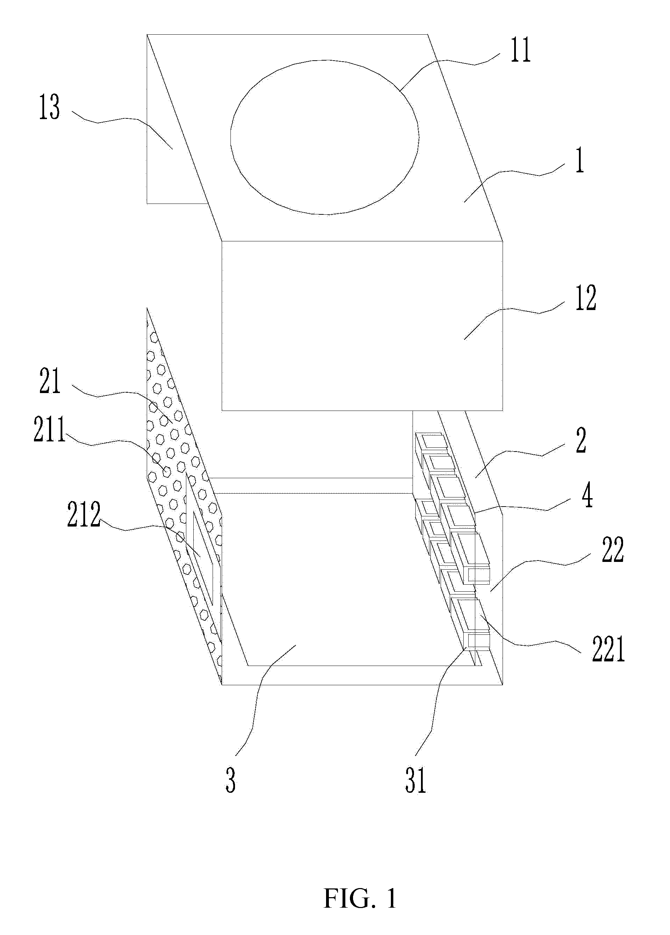

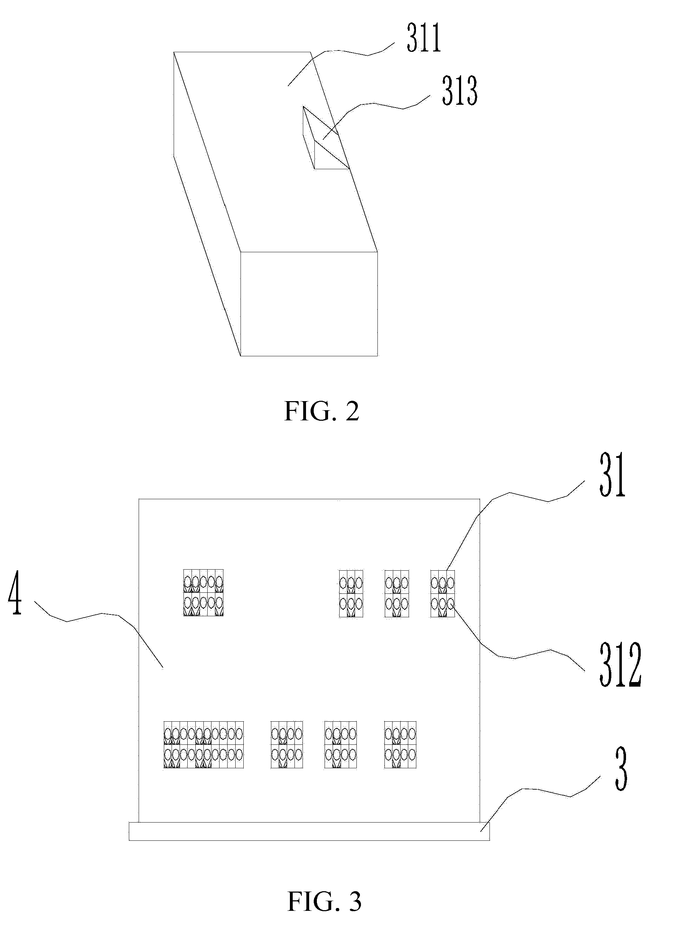

As shown in FIGs. 1 - 3, a high-power computer switching power supply comprises a shell and a plurality of wires, wherein the shell comprises an upper cover 1 and a bottom shell 2, a through hole 11 through which a heat dissipation fan (not shown) is disposed is formed in the middle of the upper cover 1, the upper cover 1 is U-shaped integrally, and both ends of the upper cover 1 are bent towards the same side to form a left side plate 12 and a right side plate 13; a PCB 3 is disposed above the bottom shell 2 and is designed according to a power circuit demand, essential elements, such as a transformer, a capacitor, a resistor, a diode and a heat dissipation sheet are disposed on the PCB 3, and the essential elements will be hidden in the embodiment for a purpose of illustrating the technical solution; in addition, the bottom shell 2 is U-shaped integrally, and both ends of the bottom shell 2 are bent at an right angle towards the same side to form a front side plate 21 and a rear side plate 22; the front side plate 21 is provided with heat dissipation holes 211 and power wire inlet holes 212, wherein the heat dissipation holes 211 are configured to dissipate heat to the back surface of a case, the power wire inlet holes 212 are configured to connect commercial power from the back surface of the case , the upper cover 1 and the bottom shell 2 are staggered by 90 degrees and are connected by bolts, and therefore, the shell employing such structure is convenient for installation of the internal PCB 3 and the essential elements; the high-power computer switching power supply also comprises a plurality of adapter interfaces 31 and a support plate 4, wherein the support plate 4 is disposed on the edge of the PCB 3 and is perpendicular to the PCB 3, and the support plate 4 is provided with a plurality of adapter interfaces 31; as shown in this embodiment, there are eight adapter interfaces 31, comprising a 20Pin adapter interface, three 8Pin adapter interfaces, three 6Pin adapter interfaces and a 10Pin adapter interface, and the plurality of adapter interfaces 31 are electrically connected with respective output ends of the PCB 3 respectively; the rear side plate 22 is provided with a plurality of power wire outlet holes matched with the adapter interfaces 31 respectively and the adapter interfaces 31 extend out from the wire outlet holes respectively; and connectors are disposed on both ends of each wire respectively, and one end of each of the plurality of wires is connected with the adapter interface 31 through the connector in a one-to-one correspondence manner.

As a preferred solution of the embodiment aforementioned, the adapter interface 31 comprises an insulation shell 311 and a plurality of terminal Pins 312, wherein the insulation shell 311 is fixedly connected to the PCB 3 and is provided with a cavity, the cavity is provided with an opening, and one end of each of the plurality of terminal Pins 312 is fixedly connected to the bottom of the cavity of the insulation shell 311 and is electrically connected with respective output end of the PCB 3; fixture blocks 313 matched with the connectors in a buckling manner are disposed on the top of the insulation shell 311; and the inner wall of the cavity of the insulation shell 311 is of an anti-misplug chamfering design, the wires and the connectors can employ existing designs by adopting structures similar to slots of a mainboard, a graphics card, a hard disk, a CD driver and the like, and both ends of each wire can be indiscriminately connected to the internal components of the computer or the PCB 3.

As an improvement of the solution of the embodiment aforementioned, the support plate 4 is equipped with a printed circuit, the plurality of terminal Pins 312 are electrically connected with respective output ends of the PCB 3 through the printed circuit, and by means of the improved solution, internal wires of the power supply in the existing technical solution can be replaced, which facilitates heat dissipation inside the power supply.

As an improvement of the solution of the embodiment aforementioned, the edge of each power wire outlet hole of the rear side plate 22 is equipped with an extension portion 221 facing to the inner side of the shell, and the extension portion 221 is configured to prevent the damage of the metal shell to the adapter interfaces 31 and facilitate fixation of the adapter interfaces 31.

## Claims

1. A high-power computer switching power supply, wherein comprising:
a shell and a plurality of wires, wherein the shell comprises an upper cover and a bottom shell (2), a through hole (11) through which a heat dissipation fan is disposed is formed in the middle of the upper cover, and both ends of the upper cover are bent towards the same side to form a left side plate (12) and a right side plate (13); a PCB is disposed above the bottom shell (2), essential elements are disposed on the PCB and both ends of the bottom shell (2) are bent towards the same side to form a front side plate (21) and a rear side plate (22), the front side plate (21) is equipped with heat dissipation holes (211) and power wire inlet holes (212), and the upper cover and the bottom shell (2) are staggered by 90 degrees and are connected by bolts; and
a support frame is disposed on the edge of the PCB, wherein a plurality of adapter interfaces (31) are disposed on the support frame and are electrically connected with respective output ends of the PCB respectively, the rear side plate (22) is equipped with a plurality of power wire outlet holes matched with the adapter interfaces (31) respectively, and the adapter interfaces (31) extend out from the wire outlet holes respectively; and connectors are disposed on both ends of each wire respectively, and one end of each of the plurality of the wires is connected with the adapter interface through the connector in a one-to-one correspondence manner.

2. The high-power computer switching power supply according to Claim 1, wherein, the adapter interface comprises an insulation shell (311) and a plurality of terminal Pins (312), wherein the insulation shell (311) is fixedly connected to the PCB and is provided with a cavity, the cavity is provided with an opening, and one end of each of the plurality of the terminal Pins (312) is fixedly connected to the bottom of the cavity of the insulation shell (311) and is electrically connected with respective output end of the PCB;
fixture blocks (313) which are matched with the connectors in a buckling manner are disposed on the top of the insulation shell (311); and
the inner wall of the cavity of the insulation shell (311) is of an anti-misplug chamfering design.

3. The high-power computer switching power supply according to Claim 2, wherein, the support plate (4) is equipped with a printed circuit, and the plurality of the terminal Pins (312) are electrically connected with respective output ends of the PCB through the printed circuit.

4. The high-powder computer switching power supply according to one of Claims 1 to 3, wherein, the edge of each power wire outlet hole (11) of the rear side plate (22) is equipped with an extension portion (221) facing to the inner side of the shell.
